# EUROPEAN PATENT APPLICATION

(11) **EP 4 556 502 A1**
(43) Date of publication of application: **21.05.2025**
(21) Application number: 23210609.6
(22) Date of filing: 17.11.2023
(51) Int. Cl.: C08G 18/10, C08G 18/28, C08G 18/32, C08G 18/76, C08K 5/21, C08L 75/02, C08L 75/04

(54) **STABILIZERS FOR UREA URETHANES**

(71) Applicant: Cliq Swisstech (The Netherlands) B.V., 9747 AC Groningen (NL)
(72) Inventor: WAGENAAR, Ruben Anne, 9718 PW Groningen (NL); SLAGT, Vincent Friso, 9401 PV Assen (NL); LOEN, Elizabeth Maaike, 9801 VP Zuidhorn (NL)
(74) Representative: Fabry, Bernd

(57) **Abstract**

Suggested is an improved process for making urea urethanes according to which in a first step hydroxy compounds are reacted with diisocyanates to form a prepolymer which is subsequently reacted with a diamine. The formation of the urea urethanes is conducted in the presence of new stabilizers derived from urea.

## Description

### AREA OF INVENTION

The present invention refers to the area of coating additives and covers a process for making urea urethanes involving substitutes for stabilizers of the lithium salt type.

### BACKGROUND OF THE INVENTION

Urea urethanes represent an important class of thixotropic agents that are used for controlling rheology for example of lacquers and paints. Typically, the products are obtained from a two-step process: first a hydroxyl compound, such as an alkyl polyglycol ether, is reacted with a diisocyanate to form a pre-polymer, which is subsequently subjected to a condensation with a diamine.

### RELEVANT PRIOR ART

EP 0198519 B1 (AKZO) discloses a process for making rheology control agents according to which an isocyanate is reacted with an amine in the presence of paint resin solutions to form a urea that forms needle-shaped crystals in very finely dispersed form. These paint binders modified in this way are offered as rheology-control agents and sag-preventing binders, as so-called "sag control agents".

EP 0006252 B1 (BYK CHEMIE) describes a process for preparing a thixotropic agent that eliminates some of the abovementioned disadvantages by describing urea urethanes that are prepared in aprotic solvents in the presence of LiCI by reacting isocyanate adducts with polyamines.

EP 1048681 B1 (BYK CHEMIE) proposed a process for making urea urethanes using a molar excess of the diisocyanate compound of at least 1.5, preferably of about 2 to 3 and up to 5. The unreacted diisocyanate is separated off for example by vacuum distillation.

EP 3381960 B1 (CLlQ SWISSTECH) suggests a urea urethane with improved rheological properties, obtainable or obtained according to a process encompassing or consisting of the following steps: (a) providing a monohydroxyl compound; (b) providing a diisocyanate compound; (c) reacting said monohydroxyl compound and said diisocyanate compound to form a prepolymer; (d) reacting said prepolymer with a diamine compound in the presence of a lithium salt, wherein said monohydroxyl compound and said diisocyanate compound are reacted in a molar ratio of 1:1.1 to 1:1.45.

EP 3459985 B1 (CLlQ SWISSTECH) is related to a process for making urea urethanes with improved rheological properties, consisting of the following steps: (a) providing a monohydroxyl compound, (b) providing a diisocyanate compound; (c) reacting said monohydroxyl compound and said diisocyanate compound to form a prepolymer; (d) reacting said pre-polymer with a diamine compound, wherein said prepolymer and said diamine are reacted in the presence of a surfactant.

### OBJECT OF THE INVENTION

Prior art urea urethanes are typically prepared in the presence of lithium salts. These stabilize the products against premature gelation. Even though lithium chloride in particular is a very effective stabilizer, this group of substances has come under criticism because, on the one hand, they are toxicologically questionable and, on the other hand, they also exhibit corrosive properties. It is therefore to be expected that their use will be banned in the foreseeable future.

Therefore, it has been the object of the present invention providing to identify alternative stabilizers for the polyurethane reaction, which at the same time provide stability to the formulations, while being non-corrosive or at least less corrosive, so that the presence of lithium salts, in particular of lithium chloride or lithium nitrate during the manufacturing process can be avoided or at least seriously reduced.

### BRIEF DESCRIPTION OF THE INVENTION

A first object of the present invention refers to a process for obtaining a urea urethane, encompassing or consisting of the following steps:
(a) providing a monohydroxyl compound of formula (I)

   R-OH (I)

   in which R is n-alkyl or isoalkyl containing 4 to 22 carbon atoms, cycloalkyl containing 6 to 12 carbon atoms, aralkyl containing 7 to 12 carbon atoms or a radical of the formula CₘH₂ₘ₊₁(O-CₙH₂ₙ)ₓ- or CₘH₂ₘ₊₁(OOC-CᵥH₂ᵥ)ₓ-, and m stands for an integer of from 1 to 22, n stands for an integer of 2 to 4, x for an integer of 1 to 15 and v means 4 or 5; or mixtures thereof.
(b) providing a diisocyanate compound of formula (II)

   OCN-[A]-NCO (II)

   in which A stands for a linear or branched alkylene radical having 2 to 20 carbon atoms or a toluene radical;
(c) reacting said monohydroxyl compound and said diisocyanate compound to form a pre-polymer;
(d) reacting said pre-polymer with a diamine compound, said diamine compound being selected from the group consisting of
   (d1) compound (III)

      H₂N-[B]-NH₂ (III)

      where B stands for a linear or branched alkylene group having 2 to 12 carbon atoms; and/or
   (d2) 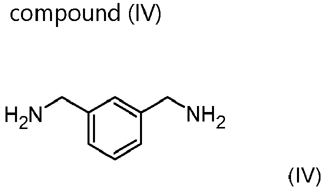 and/or
   (d3) 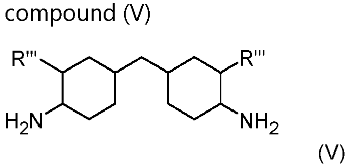 in which R‴ stands for hydrogen or a methyl group,
      wherein the urea urethane is stabilized by at least one stabilizer according to formula (VI). 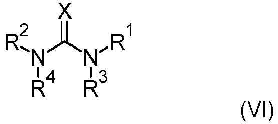 X = O, S, NR⁵
      wherein R¹, R², R³, R⁴ and R⁵ independently from each other represent hydrogen, a linear or branched, saturated or unsaturated aliphatic, cycloaliphatic or aromatic hydrocarbon group having 1 to 12 carbon atoms, or
      wherein R¹ and R² and/or R³ and R⁴ and/or R⁵ form parts of an aromatic or heteroaromatic ring system having 5 to 12 carbon atoms and being optionally substituted.

The stabilizer can be added before or after urea urethane formation.

Surprisingly it had been found that urea and urea derivatives following formula (VI) prevent urea urethanes against gelling and are suitable for substituting lithium salts in the manufacture of urea urethanes at the same performance level. The more, these new stabilizers are non-corrosive. Typically, said stabilizers are added in amounts of from about 0.1 to about 5 wt.-percent, preferably from about 0.5 to 2 wt.-percent and particularly from about 1 to about 1.5 wt.-percent - calculated on the amount of urea urethanes.

### Monohydroxyl compounds

Suitable monohydroxyl compounds encompass linear or branched, aliphatic or aromatic alcohols having 4 to 22 and preferably 6 to 12 carbon atoms and their alkylene oxide adducts, preferably adducts of on average 1 to 20, and preferably 2 to 10 mol ethylene oxide, propylene oxide or their mixtures to one of the aforementioned alcohols. Particularly preferred are butanol (all isomers), pentanol, hexanol, heptanol, octanol, nonanol, decanol, undecanol, dodecanol, myristyl alcohol, stearyl alcohol, cetyl alcohol, oleyl alcohol, erucyl alcohol, behenyl alcohol, phenol, benzyl alcohol and their technical mixtures and adducts of 1 to 20 mol, preferably 2 to 10 mol ethylene oxide and/or 1 to 5, preferably 2 to 4 mol propylene oxide.

Particularly preferred, however, are alkyl polyalkylene glycol ethers, preferably alkyl polyethylene glycol ethers having a molecular weight of from about 200 to about 1,000 Dalton, as for example methyl ethers (MPEG) or butyl ethers (BPEG) of PEG100, PEG200, PEG300, PEG350 or PEG500.

### Diisocyanate compounds

While the diisocyanate compound can be of aliphatic origin, the preferred embodiments encompass aromatic or cycloaliphatic compounds. Particularly preferred is toluene diisocyanate which as available for example under the trademark Desmodur^{®} in the market. With regard to the performance of the end product a toluene diisocyanate encompassing about 50 to about 100 mol% of the 2,4-isomer is particularly preferred.

### Diamine compounds

Suitable diamine compounds encompass aliphatic, cycloaliphatic and aromatic diamines. The preferred species, however, is xylene diamine.

In a particular preferred embodiment, the urea urethanes of the present invention are obtained by reacting MPEG300, MPEG350, BPEG300 or BPEG350 with toluene diisocyanate in a molar ration of from 1:1.2 to 1:1.4 to form a pre-polymer, which is subsequently reacted with xylene diamine to form the final product.

### Solvents

The formation of the polymers can be conducted in the presence of solvents. Typically, suitable solvents for are aprotic, non-nucleophilic and/or polar. Suitable examples encompass DMSO, NMP, NBP, toluene and mixtures thereof.

### Stabilizers

Suitable stabilizers according to formula (VI) can be selected from the following structures: 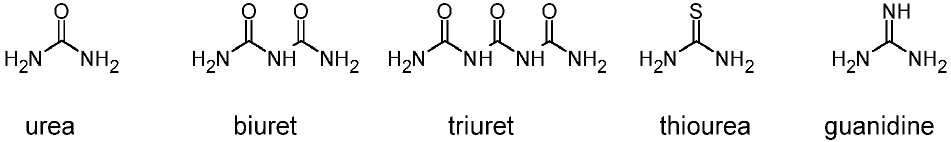 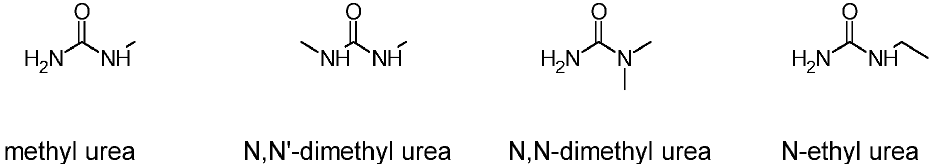 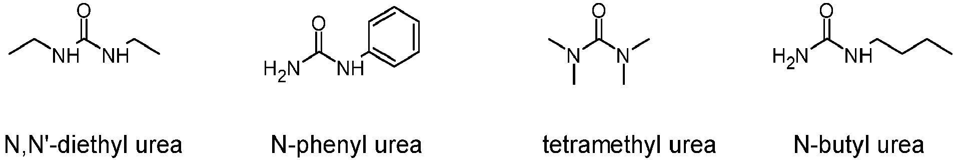 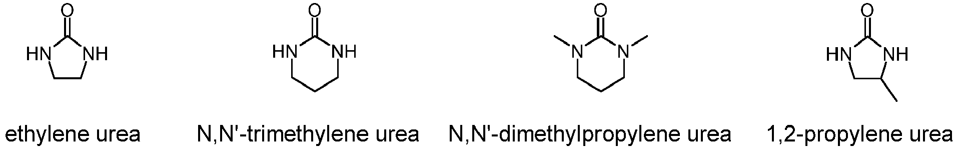 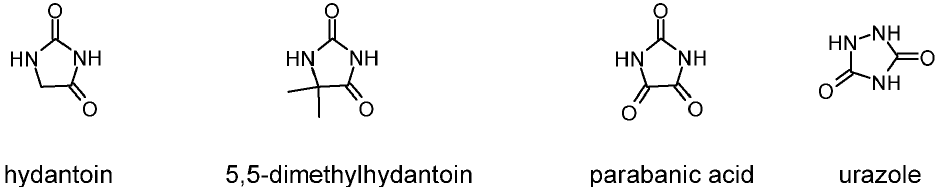 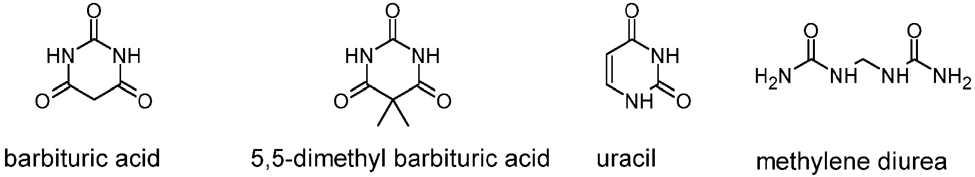 or mixtures thereof.

### Reaction step 1: Formation of the pre-polymer

The formation of the pre-polymer, according to which said monohydroxyl compounds and said diisocyanate compounds are reacted in a molar ratio of from about 1:0.5 to about 1:6, more preferably from about 1:1,05 to about 1:3 and even more preferred from about 1:1,1 to about 1:2,5. Depending on the excess of diisocyanate pre-polymers containing one or two polyether groups are obtained. A disubstituted pre-polymer does not offer a free reaction side for condensation with the amine group, remains as such in the final composition. Applicant, however, has recognized that the dissatisfying performance of the similar products from the market is linked to the amount of unreacted pre-polymers. By reducing the excess of diisocyanate the amount of pre-polymers available for further condensation with the diamine compound - as desired - is significantly increased. Which lead to products of improved performance. Once the pre-polymer is formed it is advantageous removing the unreacted diisocyanate for example by distillation in vacuum. Preferably the remaining pre-polymers show a content of unreacted diisocyanate of less than 0.5 % by weight, and preferably about 0.1 to 0.2 % by weight. The specific reaction conditions are illustrated by - but not limited to - the working examples.

### Reaction step 2: Formation of the urea urethane

Subsequently the pre-polymer thus obtained is reacted with a diamine compound in the presence of a solvent and a stabilizer. Suitable solvents encompass the same as disclosed supra, but particularly preferred are dimethyl formamide, dimethyl acetamide, NMP, NBP or similar alkyl pyrrolidones, alkyl caprolactams and DMSO or mixtures thereof.

The addition of the new stabilizers according to formula (VI) inhibits an early and unwanted gelification of the urea urethanes. Notwithstanding this fact, secondary stabilizers can be co-used for other reasons.

Suitable secondary stabilizers encompass lithium salts, such as lithium chloride or lithium nitrate. The use of lithium nitrate in contrast to lithium chloride can be advantageous since chloride ions may have a disadvantageous effect on coating compounds and promote the corrosion of the metallic bases to which the thixotropic coating compounds are applied. In the alternative, surfactants can be used, preferably alkyl sulfosuccinates, such as sodium dioctyl sulfosuccinate. For further examples of surfactants suitable as stabilizers reference is made to EP 3459985 B1. Also, mixtures of lithium salts and surfactants can be applied. Compared to lithium salts surfactants show the advantage of being non-toxic. The usual amounts of secondary stabilizers reach from about 0.2 to about 2 mol-%, preferably from about 0.5 to about 1.5 mol-%, particularly preferably from about 0.75 to about 1.25 mol-%, calculated on the amine equivalent of the diamine used.

Typically, the diamine compound and the (primary and optionally secondary) stabilizers are dissolved in the solvent and placed into the reactor to which the pre-polymer is added (or vice-versa). The molar ratio between pre-polymer and diamine compound is typically adjusted to about 1:1.2 to 1.2:1. Stabilizer can also be added after condensation.

The solids amount can be adjusted in broad ranges of from about 5 to about 80 % by weight, preferably about 20 to about 60 % by weight, and more preferred about 40 to about 50 % by weight. The amount to 100 % is the solvent, optionally comprising small amounts of suitable additives as for example corrosion inhibitors.

The urea urethanes prepared according to the present invention do not contain either free isocyanate groups or free amino groups. They are accordingly physiologically safe. Furthermore, no adverse side reactions occur with binders or fillers. The storage stability of these urea urethane solutions prepared in this way is extraordinarily high and is certainly 6 months or more at, normal storage temperature and conditions.

The reaction is exemplified by the following scheme:

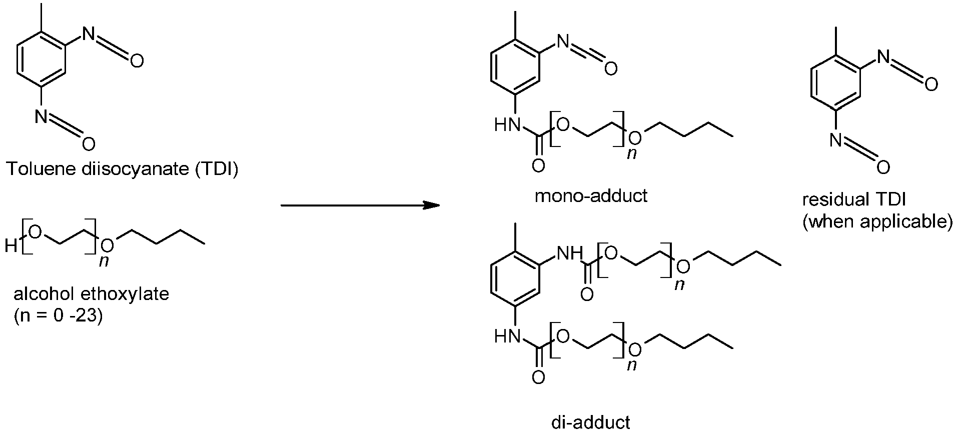

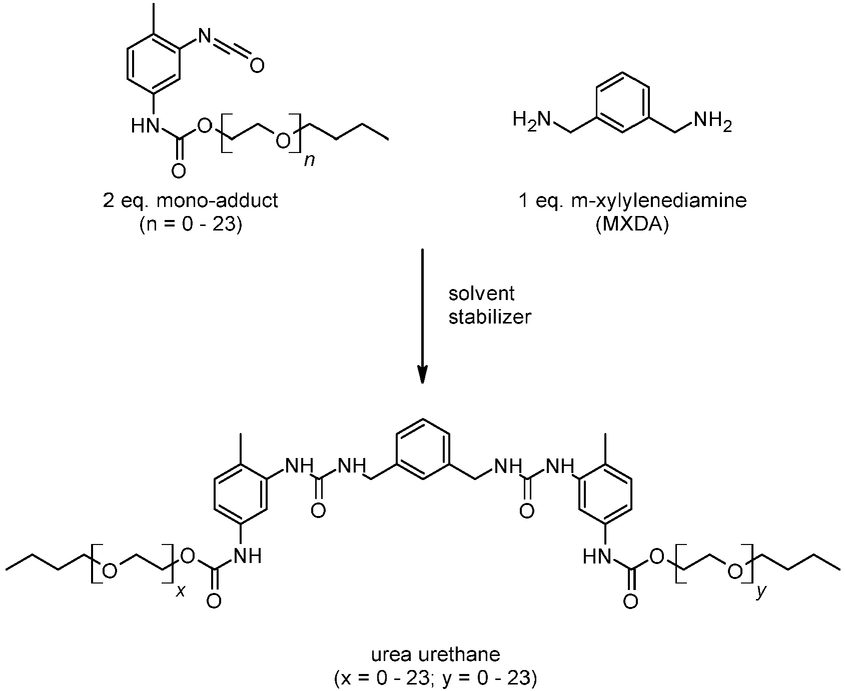

### INDUSTRIAL APPLICATION

Another object of the present invention refers to the use of urea and urea derivatives according to formula (VI) 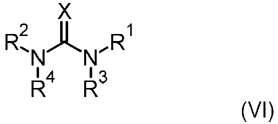 X = O, S, NR⁵
wherein R¹, R², R³, R⁴ and R⁵ independently from each other represent hydrogen, a linear or branched, saturated or unsaturated aliphatic, cycloaliphatic or aromatic hydrocarbon group having 1 to 12 carbon atoms, or
wherein R¹ and R² and/or R³ and R⁴ and/or R⁵ form parts of an aromatic or heteroaromatic ring system having 5 to 12 carbon atoms and being optionally substituted
as stabilizers in the manufacture of urea urethanes, particularly for preventing said urea urethanes against gelling.

### EXAMPLES

### COMPARATIVE EXAMPLE C1

### Synthesis of mono isocyanate with glycol compounds (step A)

A 1-I-reactor was loaded with 209 parts of TDI-100 and placed under a nitrogen blanket at 25°C. 382 parts of polyethylene glycol monobutyl ether was added dropwise to the mixture while stirring. The temperature did not exceed 35°C. After completing the addition, the reaction was followed on NCO content and stopped when the NCO content had reached a value corresponding to the theoretical amount for a mono adduct. Subsequently the excess of diisocyanate was evaporated at elevated temperature under vacuum. A slightly brown product was obtained.

### Synthesis of polyurea based on mono isocyanate (step B)

A 1L reactor was loaded with 12 parts of dioctyl sulfosuccinate sodium salt, 42.4 parts of MXDA and 588 grams of NBP. The mixture was heated to 60°C and mixed until a homogenous mixture was obtained. While mixing, 357.6 parts of mono-adduct from step (A) was added in a dropwise fashion within 1h. Followed by IR, the reaction was conducted until the NCO peak disappeared. The reaction mixture was stirred for another 30 minutes and cooled down to room temperature. A clear low viscous product was obtained.

### INVENTIVE EXAMPLES 1 TO 3

### Example 1

### Synthesis of mono isocyanate with glycol compounds (step A)

A 1-I-reactor was loaded with 209 parts of TDI-100 and placed under a nitrogen blanket at 25°C. 382 parts of polyethylene glycol monobutyl ether was added dropwise to the mixture while stirring. The temperature did not exceed 35°C. After completing the addition, the reaction was followed on NCO content and stopped when the NCO content had reached a value corresponding to the theoretical amount for a mono adduct. Subsequently the excess of diisocyanate was evaporated at elevated temperature under vacuum. A slightly brown product was obtained.

### Synthesis of polyurea based on mono isocyanate (step B)

A 1L reactor was loaded with 12 parts of Urea, 42.4 parts of MXDA and 448 grams of DMSO. The mixture was heated to 60°C and mixed until a homogenous mixture was obtained. While mixing, 357.6 parts of mono-adduct from step A was added in a dropwise fashion within 1h.

Followed by IR, the reaction was conducted until the NCO peak disappeared. The reaction mixture was stirred for another 30 minutes and 140 parts of N,N-dimethyldecanamide was added as co-solvent and homogenised. The resulting mixture was cooled to room temperature. A clear low viscous product was obtained.

### Example 2

### Synthesis of mono isocyanate with glycol compounds (step A)

A 1-I-reactor was loaded with 209 parts of TDI-100 and placed under a nitrogen blanket at 25°C. 382 parts of polyethylene glycol monobutyl ether was added dropwise to the mixture while stirring. The temperature did not exceed 35°C. After completing the addition, the reaction was followed on NCO content and stopped when the NCO content had reached a value corresponding to the theoretical amount for a mono adduct. Subsequently the excess of diisocyanate was evaporated at elevated temperature under vacuum. A slightly brown product was obtained.

### Synthesis of polyurea based on mono isocyanate (step B)

A 1L reactor was loaded with 12 parts of thiourea, 42.4 parts of MXDA and 588 grams of N-butyl pyrrolidone. The mixture was heated to 60°C and mixed until a homogenous mixture was obtained. While mixing, 357.6 parts of mono-adduct from step B of Comparative Example C1 was added in a dropwise fashion within 1h. Followed by IR, the reaction was conducted until the NCO peak disappeared. The reaction mixture was stirred for another 30 minutes and cooled down to room temperature. A clear low viscous product was obtained.

### Example 3

### Synthesis of mono isocyanate with glycol compounds (step A)

A 1-I-reactor was loaded with 209 parts of TDI-100 and placed under a nitrogen blanket at 25°C. 382 parts of polyethylene glycol monobutyl ether was added dropwise to the mixture while stirring. The temperature did not exceed 35°C. After completing the addition, the reaction was followed on NCO content and stopped when the NCO content had reached a value corresponding to the theoretical amount for a mono adduct. Subsequently the excess of diisocyanate was evaporated at elevated temperature under vacuum. A slightly brown product was obtained.

### Synthesis of polyurea based on mono isocyanate (step B)

A 1L reactor was loaded with 12 parts of ethylene urea, 42.4 parts of MXDA and 588 grams of N-butyl Pyrrolidone. The mixture was heated to 60°C and mixed until a homogenous mixture was obtained. While mixing, 357.6 parts of mono-adduct from step B of Comparative Example C1 was added in a dropwise fashion within 1h. Followed by IR, the reaction was conducted until the NCO peak disappeared. The reaction mixture was stirred for another 30 minutes and cooled down to room temperature. A clear low viscous product was obtained.

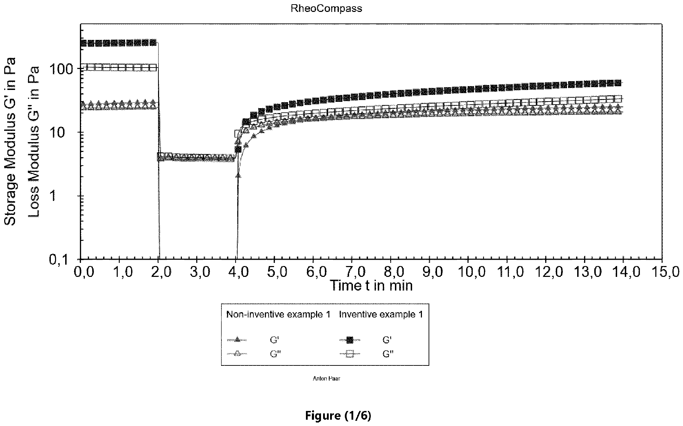

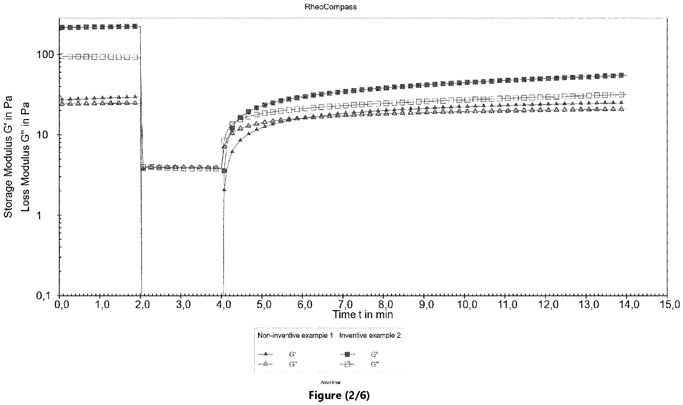

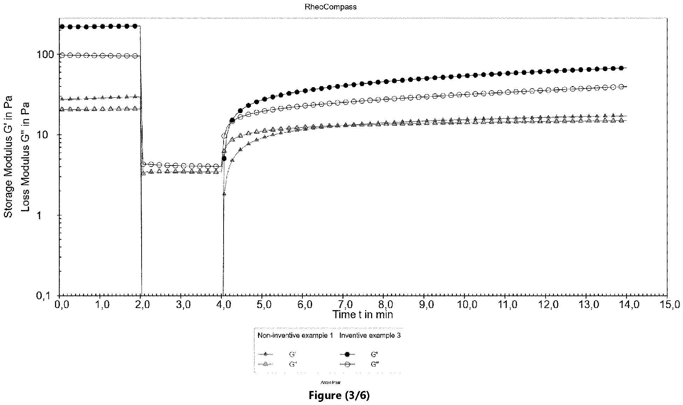

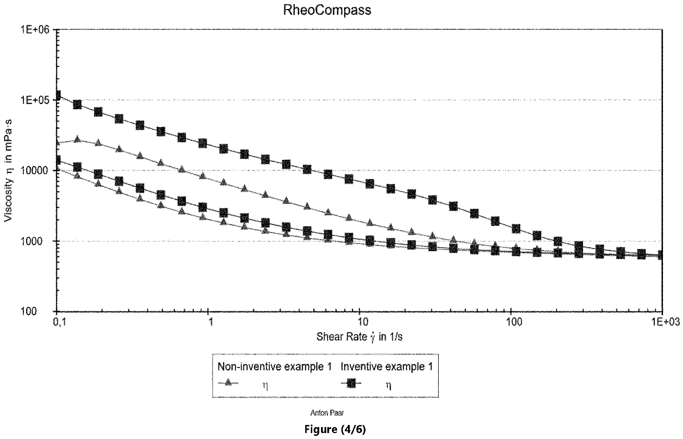

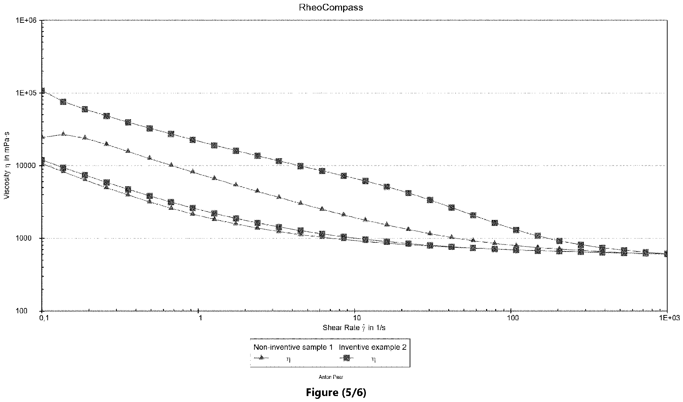

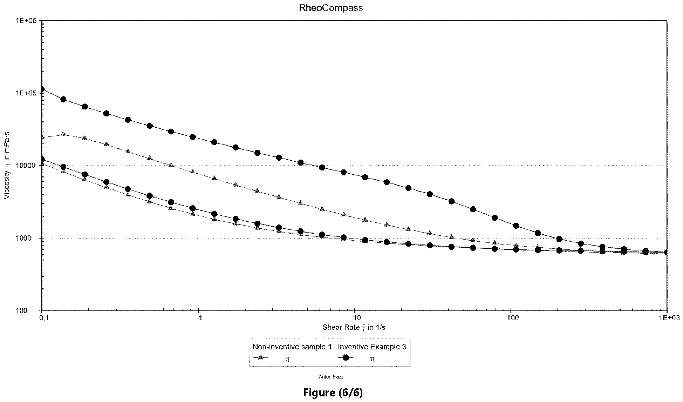

### Brief explanation of Figures 1 to 6

**Figure 1** shows a viscosity recovery curve comparison between the inventive product according to inventive Example 1 (■) and the non-inventive example 1 (▲). For the inventive product we see an improved thixotropic behavior, without loss of initial and final viscosity.
**Figure 2** shows a viscosity recovery curve comparison between the inventive product according to inventive Example 2 (■) and the non-inventive example 1 (▲). For the inventive product we see an improved thixotropic behavior, without loss of initial and final viscosity.
**Figure 3** shows a viscosity recovery curve comparison between the inventive product according to inventive Example 3 (●) and the non-inventive example 1 (▲). For the inventive product we see an improved thixotropic behavior, without loss of initial and final viscosity.
**Figure 4** shows a flow curve comparison between the inventive product according to inventive example 1 (■) and the non-inventive example 1 (▲). Again, the product according to the invention shows an improved thixotropic flow is observed.
**Figure 5** shows a flow curve comparison between the inventive product according to inventive example 2 (■) and the non-inventive example 1 (▲). Again, the product according to the invention shows an improved thixotropic flow is observed.
**Figure 6** shows a flow curve comparison between the inventive product according to inventive example 3 (●) and the non-inventive example 1 (▲). Again, the product according to the invention shows an improved thixotropic flow is observed without.

## Claims

1. A process for obtaining a urea urethane, encompassing or consisting of the following steps:
(a) providing a monohydroxyl compound of formula (I)
R-OH (I)
in which R is n-alkyl or isoalkyl containing 4 to 22 carbon atoms, cycloalkyl containing 6 to 12 carbon atoms, aralkyl containing 7 to 12 carbon atoms or a radical of the formula CₘH₂ₘ₊₁(O-CₙH₂ₙ)ₓ- or CₘH₂ₘ₊₁(OOC-CᵥH₂ᵥ)ₓ-, and m stands for an integer of from 1 to 22, n stands for an integer of 2 to 4, x for an integer of 1 to 15 and v means 4 or 5;
(b) providing a diisocyanate compound of formula (II)
OCN-[A]-NCO (II)
in which A stands for a linear or branched alkylene radical having 2 to 10 carbon atoms or a toluene radical;
(c) reacting said monohydroxyl compound and said diisocyanate compound to form a pre-polymer;
(d) reacting said pre-polymer with a diamine compound, said diamine compound being selected from the group consisting of
(d1) compound (III)
H₂N-[B]-NH₂ (III)
where B stands for a linear or branched alkylene group having 2 to 12 carbon atoms; and/or 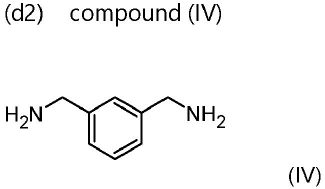 and/or
(d3) 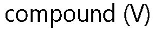 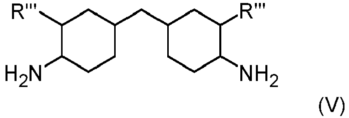 in which R‴ stands for hydrogen or a methyl group,
wherein the formation of the urea urethane takes place in the presence of at least one stabilizer according to formula (VI) 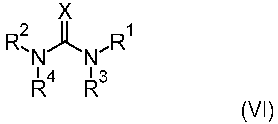 X = O, S, NR⁵
wherein R¹, R², R³, R⁴ and R⁵ independently from each other represent hydrogen, a linear or branched, saturated or unsaturated aliphatic, cycloaliphatic or aromatic hydrocarbon group having 1 to 12 carbon atoms, or
wherein R¹ and R² and/or R³ and R⁴ and/or R⁵ form parts of an aromatic or heteroaromatic ring system having 5 to 12 carbon atoms and being optionally substituted.

2. The process of Claim 1, wherein said stabilizers are selected from the following structures 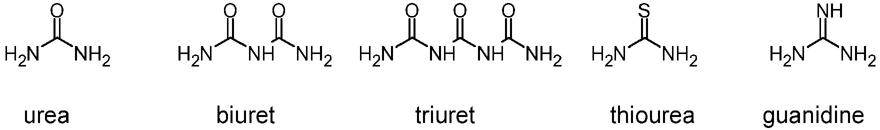 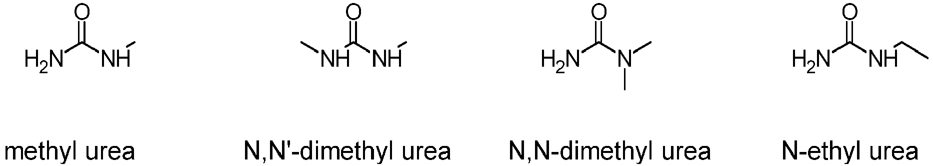 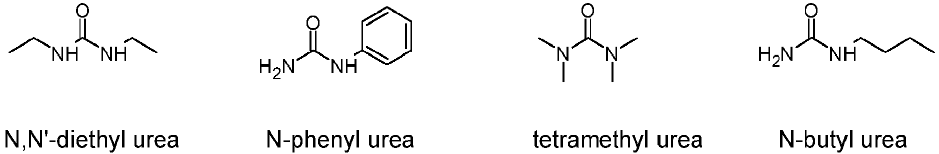 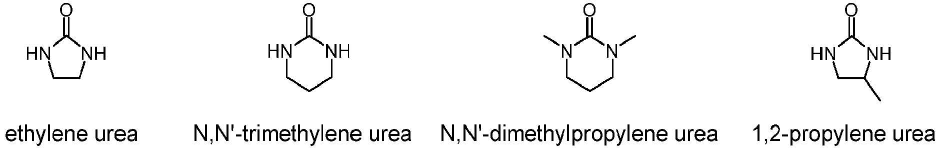 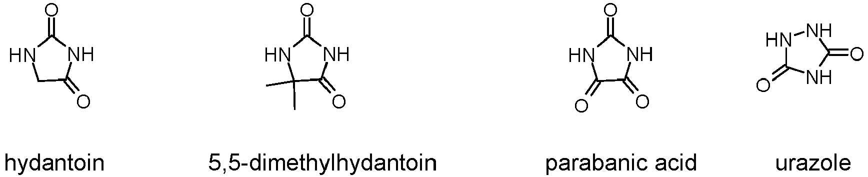 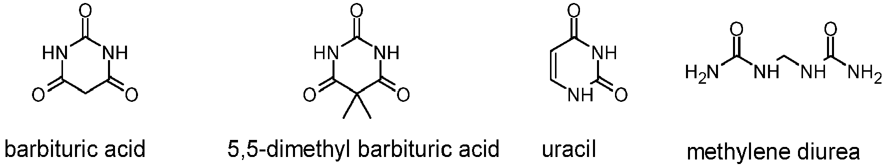 or mixtures thereof.

3. The process of Claim 1 and/or 2, wherein said stabilizers prevent the urea urethanes against gelling.

4. The process of any of the preceding claims 1 to 3, wherein said stabilizers are added in amounts of from about 0.1 to about 5 wt.-percent - calculated on the amount of urea urethanes.

5. The process of any of the preceding Claims 1 to 4, wherein said monohydroxyl compound is an alkyl polyalkylene glycol ether having a molecular weight of from about 200 to about 1,000 Dalton.

6. The process of any of the preceding Claims 1 to 5, wherein said diisocyanate compound is toluene diisocyanate.

7. The process of any of the preceding Claims 1 to 6, wherein said toluene diisocyanate encompasses about 50 to about 100 mol-% of the 2,4-isomer.

8. The process of any of the preceding Claims 1 to 7, wherein said monohydroxyl compound and said diisocyanate compound are reacted in a molar ratio of from about 1:0.5 to about 1:4.

9. The process of any of the preceding Claims 1 to 8, wherein said monohydroxyl compound and said diisocyanate compound are reacted in a molar ratio of from about 1:0.9 to about 1:1.4.

10. The process of any of the preceding Claims 1 to 9, wherein the diamine compound is xylene diamine.

11. The process of any of the preceding Claims 1 to 10, wherein the reaction of the monohydroxyl compound and the diisocyanate and/or the reaction of the pre-polymer and the diamine take place in the presence of a solvent.

12. The process of Claim 11, wherein the solvent is selected from the group consisting of DMSO, NMP, NBP, toluene and mixtures thereof.

13. The process of any of the preceding Claims 1 to 12, wherein the reaction of the pre-polymer and the diamine takes place in the presence of a secondary stabilizer selected from the group consisting of lithium salts, surfactants and mixtures thereof.

14. The use of urea and urea derivatives according to formula (VI) 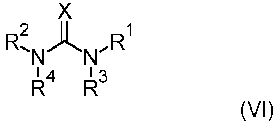 X = O, S, NR⁵
wherein R¹, R², R³, R⁴ and R⁵ independently from each other represent hydrogen, a linear or branched, saturated or unsaturated aliphatic, cycloaliphatic or aromatic hydrocarbon group having 1 to 12 carbon atoms, or
wherein R¹ and R² and/or R³ and R⁴ and/or R⁵ form parts of an aromatic or heteroaromatic ring system having 5 to 12 carbon atoms and being optionally substituted
as stabilizers in the manufacture of urea urethanes.

15. The use according to Claim 14, wherein said stabilizers prevent urea urethanes against gelling.
